(19) Europäisches Patentamt
European Patent Office
Office européen des brevets

(11) **EP 2 564 260 B1**

(12) **FASCICULE DE BREVET EUROPEEN**

(45) Date de publication et mention de la délivrance du brevet:
**03.12.2014 Bulletin 2014/49**

(21) Numéro de dépôt: **11717256.9**

(22) Date de dépôt: **27.04.2011**

(51) Int Cl.:
***G02B 27/48*** $^{(2006.01)}$

(86) Numéro de dépôt international:
**PCT/EP2011/056681**

(87) Numéro de publication internationale:
**WO 2011/135008 (03.11.2011 Gazette 2011/44)**

(54) **REDUCTEUR DE SPECKLES ET UNITE DE PROJECTION COMPRENANT UN RÉDUCTEUR DE SPECKLES**

VORRICHTUNG ZUR UNTERDRÜCKUNG DES SPECKEL EFFEKTES UND PROJEKTIONSEINHEIT MIT EINER VORRICHTUNG ZUR UNTERDRÜCKUNG DES SPECKEL EFFEKTES

SPECKLE REDUCING DEVICE AND PROJECTION UNIT COMPRISING A SPECKLE REDUCING DEVICE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **28.04.2010 FR 1053271**

(43) Date de publication de la demande:
**06.03.2013 Bulletin 2013/10**

(73) Titulaire: **Delphi Technologies, Inc.**
**Troy, MI 48007 (US)**

(72) Inventeur: **MOUSSA, Hassan**
**F-67400 Illkirch (FR)**

(74) Mandataire: **Robert, Vincent et al**
**Delphi France SAS**
**Bât. le Raspail - ZAC Paris Nord 2**
**22, avenue des Nations**
**CS 65059 Villepinte**
**95972 Roissy CDG Cedex (FR)**

(56) Documents cités:
**US-A1- 2001 007 510    US-A1- 2007 058 135**
**US-A1- 2009 016 390    US-B1- 6 577 429**

## Description

Introduction

La présente invention concerne un dispositif réducteur de speckles et l'application de celui-ci aux unités de projection utilisant des sources lumineuses cohérentes, notamment du type dispositif d'affichage tête haute (en anglais « head up display ») pour automobiles.

Etat de la technique

Un dispositif d'affichage tête haute comprend typiquement une unité de projection qui produit un faisceau lumineux destiné à être dirigé vers un combineur en vue de projeter des images, notamment des informations de fonctionnement du véhicule ou plus généralement relatives à la conduite sous la forme d'une image virtuelle située dans le champ de vision du conducteur.

Un phénomène gênant qui intervient dans de tels dispositifs d'affichage tête haute ou plus généralement dans tout type de système de projection employant une source de lumière cohérente telle qu'un laser, est connu sous le terme anglais de « speckle ». Le terme speckle étant également couramment utilisé en français dans le domaine, bien que l'on parle également de « tavelures », de « chatoiement », ou encore de granularité laser.

Les propriétés particulières de cohérence spatiale et temporelle de la lumière laser sont à l'origine du phénomène de speckle. Après diffusion par une surface naturellement rugueuse, les ondes lumineuses cohérentes émises par une source laser interfèrent de manière constructive en certains points de l'espace et destructive en d'autres ; l'ensemble de taches lumineuses formées est appelé figure de speckles et existe dans tout l'espace où se superposent les ondes diffusées par la surface.

Le phénomène de speckle est utilisé dans certains cas pour mesurer la déformation d'objets. Mais dans nombre d'applications, et notamment dans les systèmes de projection utilisant des éléments diffractifs, le phénomène de speckle est gênant et il est important de le réduire afin d'améliorer la qualité de l'image perçue par l'utilisateur.

Nombre de solutions ont été proposées pour réduire les speckles, majoritairement basés sur le moyennage de la phase du rayonnement par mise en mouvement d'éléments optiques. On connaît par exemple les systèmes à diffuseurs rotatifs. Ou encore des diffuseurs ou miroirs à translation et/ou basculement, lesquels peuvent être mis en mouvement au moyen d'actionneurs ou moteurs piézo-électriques. Les documents EP-A1-1 510 851 et EP-A1-1 655 636 décrivent ce type de solutions.

On notera que, comme il est par ailleurs décrit dans ces demandes de brevet précitées, les systèmes à translation et surtout rotatifs sont volumineux, nécessitent un contrôle rigoureux des mouvements et peuvent poser des problèmes de confort d'utilisation et de robustesse. L'encombrement des systèmes réducteurs de speckles traditionnels est tel qu'il limite leur application dans certaines conceptions optiques miniaturisées.

Le document US 2009/016390 décrit un système avec réduction de speckles comprenant une unité émetteur de lumière associée à un élément sélecteur de longueur d'onde dont le principe est d'avoir plusieurs émetteurs de lumière qui émettent à des longueur d'ondes légèrement différentes pour diminuer la cohérence et donc les speckles. Des éléments Peltier permettent de s'assurer que chacune des régions du dispositif émet bien à la fréquence désirée. Des distorsions peuvent être introduites à l'aide d'éléments générateurs de chaleur type piézoélectrique-utilisés comme actionneurs, à la place des éléments Peltier.

Le US 2001/007510 décrit un réducteur de speckles comprenant une surface de projection avec des particules diffusantes en suspension dans un fluide et en mouvement relatif constant. Le fluide peut être chauffé avec des résistances ou être agité au moyen d'un actionneur piézoélectrique.

De manière similaire, le document US 2007/058135 présente un système qui comprend un diffuseur électro-phorétique qui change la phase des rayons, et qui est basé sur une agitation de particules en suspension.

Objet de l'invention

L'objet de la présente invention est de proposer un système amélioré de réduction de speckles pour un faisceau de lumière cohérente, ne comprenant pas les désavantages des systèmes translatifs et rotatifs connus.

Description générale de l'invention

Conformément à l'invention, cet objectif est atteint par un dispositif réducteur de speckles pour un faisceau de lumière cohérente comprenant les caractéristiques de la revendication 1.

Selon un aspect de l'invention, l'élément optique traversé par le rayon lumineux à traiter est un cristal piézo-électrique, et l'on excite au moins un mode vibratoire du cristal de sorte à provoquer son échauffement. Dans ce contexte, on appréciera que l'on utilise préférablement un cristal piézo-électrique sollicité dans le mode vibratoire dit de « cisaillement en épaisseur » (en anglais : *thickness-shear mode)* du cristal (à noter qu'il s'agit en fait d'un mode de déformation infinitésimal - qui ne cause pas de vibrations apparentes et ne peut être utilisé pour l'actionnement). Dans ce cas, les moyens d'échauffement comprennent avantageusement des électrodes appliquées sur le cristal et connectées au module de commande de sorte à pouvoir exciter le mode vibratoire voulu.

Ainsi, contrairement aux systèmes de réduction de speckles basés sur une rotation ou une translation d'un diffuseur, le dispositif selon la présente invention propose d'atténuer le phénomène de speckle par une variation de l'indice de réfraction d'un élément optique traversé par le faisceau lumineux cohérent à traiter. Le principe de correction de speckles mis en oeuvre est donc basé sur une variation d'une propriété intrinsèque de l'élément optique et non sur le déplacement d'un diffuseur.

On appréciera que la variation d'indice de réfraction résulte de perturbations thermiques provoquées délibérément au sein de l'élément optique. En effet, l'indice de réfraction d'un milieu est, comme on le sait, également dépendant de la température de ce milieu. En d'autres termes, la présente invention exploite une variation de l'indice de réfraction d'un élément optique transparent en faisant varier la température de celui-ci à partir d'une température initiale (par ex. 25°C).

Les variations de températures sont générées par l'usage combiné des moyens de chauffage et de l'élément refroidisseur, qui permettent de créer des variations de température contrôlées dans l'élément optique. Le contrôleur est avantageusement configuré pour créer des perturbations thermiques aléatoires ou pseudo-aléatoires.

Les variations d'indice de réfraction de l'élément optique provoquent des variations de phase dans le faisceau lumineux qui le traverse, et qui, avec un contrôle approprié de la fréquence et de l'amplitude des perturbations thermiques, résultent en un effet de compensation ou moyennage pour l'oeil humain, et donc de réduction des speckles. A cet effet, le module de commande est avantageusement configuré pour générer des perturbations thermiques qui se traduisent par des variations d'indice de réfraction à une fréquence supérieure à la sensibilité de l'oeil humain (perception rétinienne).

Pour la mise en oeuvre de la présente invention, il convient que le matériau choisi pour l'élément optique soit essentiellement transparent aux longueurs d'ondes du faisceau lumineux à traiter et que son indice de réfraction présente une variation détectable dans la plage des températures de fonctionnement désirée afin d'observer le phénomène voulu. De préférence, la variation d'indice de réfraction est de l'ordre d'au moins 15% (en valeur absolue) entre 20°C et 125°C, de préférence de l'ordre de 30%.

Les moyens d'échauffement de l'élément optique peuvent par exemple comprendre en outre un ou plusieurs éléments résistifs chauffants appliqués sur celui-ci.

Pour un contrôle amélioré, le dispositif comprend avantageusement des moyens pour déterminer la température de l'élément optique. Une possibilité consiste à mesurer la température avec un thermocouple ou autre dispositif approprié. Mais lorsque l'élément transparent est un cristal piézo-électrique, la température du cristal peut être déterminée par l'intermédiaire du couplage thermo-élastique du quartz, donc en mesurant la fréquence d'oscillation réelle du cristal.

De préférence, l'élément optique est maintenu par un support de fixation métallique, lequel assure également un couplage thermique avec l'élément refroidisseur.

L'élément refroidisseur peut comprendre un élément Peltier associé de préférence à un dissipateur de chaleur. Un élément Peltier est avantageux pour sa facilité de commande et d'intégration dans des dispositifs miniaturisés.

On l'aura compris, le présent dispositif réducteur de speckles trouve une application principale dans les unités de projection utilisant des sources de lumière cohérentes. Et une application complémentaire est donc le domaine des dispositifs d'affichage tête haute comprenant une unité de projection munie du présent dispositif réducteur de speckles.

On remarquera encore que l'absence de mécanisme de rotation ou translation dans le présent dispositif selon l'invention permet une miniaturisation extrême, la taille du dispositif pouvant atteindre une dimension de l'ordre de 200 $\mu$m. Il est dès lors possible d'intégrer le présent dispositif réducteur de speckles directement dans une source de lumière cohérente telle qu'un laser, l'élément optique pouvant par exemple constituer la fenêtre de sortie de la source.

Dans ce cas d'intégration dans la source de lumière, l'élément optique possède une zone de traitement traversée par le faisceau de lumière cohérente adaptée au diamètre de ce faisceau ; cette zone de traitement peut par exemple avoir un diamètre de l'ordre de 200 $\mu$m. L'élément optique peut être alors utilisé comme fenêtre de sortie après l'élément générateur de lumière (par exemple du type à semi-conducteurs) ou des cristaux de doublage de fréquence, le cas échéant. L'élément optique peut être couplé thermiquement à un élément Peltier monté en externe du boîtier de la source de lumière.

Selon un autre aspect, la présente invention concerne également une méthode de réduction de speckles suivant la revendication 12 dans laquelle un faisceau de lumière de lumière cohérente à traiter traverse un élément optique, caractérisée en ce que cet élément optique est associé à des moyens d'échauffement et à un élément refroidisseur et en ce qu'on crée des perturbations thermiques au sein de cet élément optique de sorte à faire varier son indice de réfraction.

De préférence, les perturbations thermiques sont créées de manière aléatoire ou pseudo aléatoire. Les variations résultantes de l'indice de réfraction ont avantageusement une fréquence supérieure à la sensibilité de l'oeil humain.

Selon une variante, l'élément optique est un cristal piézo-électrique sollicité dans un mode vibratoire provocant son échauffement, de préférence le mode de cisaillement d'épaisseur.

Selon une autre variante, les moyens d'échauffement comprennent une ou plusieurs électrodes résistives apposées sur l'élément optique.

Description à l'aide des Figures

D'autres particularités et caractéristiques de l'invention ressortiront de la description détaillée de quelques modes de réalisation avantageux présentés ci-dessous, à titre d'illustration, en se référant aux dessins annexés. Ceux-ci montrent:

figure 1 : un schéma de principe représentant une unité de projection comprenant le présent dispositif réducteur de speckles ;
figure 2 : un schéma d'un dispositif réducteur de speckles utilisant des électrodes résistives ;
figure 3 : un graphique illustrant la variation de l'indice de réfraction d'un cristal de quartz en fonction de la température ;
figure 4 : un graphique schématisant l'état de fonctionnement des électrodes et de l'élément refroidisseur et les variations d'indice de réfraction correspondantes en fonction du temps ;
figure 5 : un diagramme de principe du fonctionnement du dispositif réducteur de speckles de la Fig.1 ; et
figure 6 : un schéma d'un mode de réalisation préféré du présent dispositif réducteur de speckles ;
figure 7 : une vue en coupe A-A du dispositif réducteur de speckles de la Fig. 6.

Le présent dispositif réducteur de speckles est basé sur une réduction des speckles par une variation de phase des rayons lumineux obtenue par une variation de l'indice de réfraction d'un élément optique traversé par le faisceau de lumière cohérente à traiter, ladite variation étant obtenue par des perturbations thermiques provoquées au sein de cet élément optique.

On le sait, la vitesse de propagation (v) d'une onde dans un milieu d'indice de réfraction n est donnée par la relation :

$$v = c / n$$

c étant la célérité de la lumière dans le vide. La vitesse de phase d'une onde dépend donc de l'indice de réfraction du milieu dans lequel cette onde se propage.

Il est par ailleurs connu que l'indice de réfraction d'un milieu dépend, de manière plus ou moins sensible, de la température.

Le présent dispositif exploite donc cette relation entre indice de réfraction et température pour provoquer des variations contrôlées de phase du rayonnement le traversant, les variations étant générées de sorte à provoquer un moyennage de phase dans l'oeil de l'utilisateur, atténuant les effets de speckle.

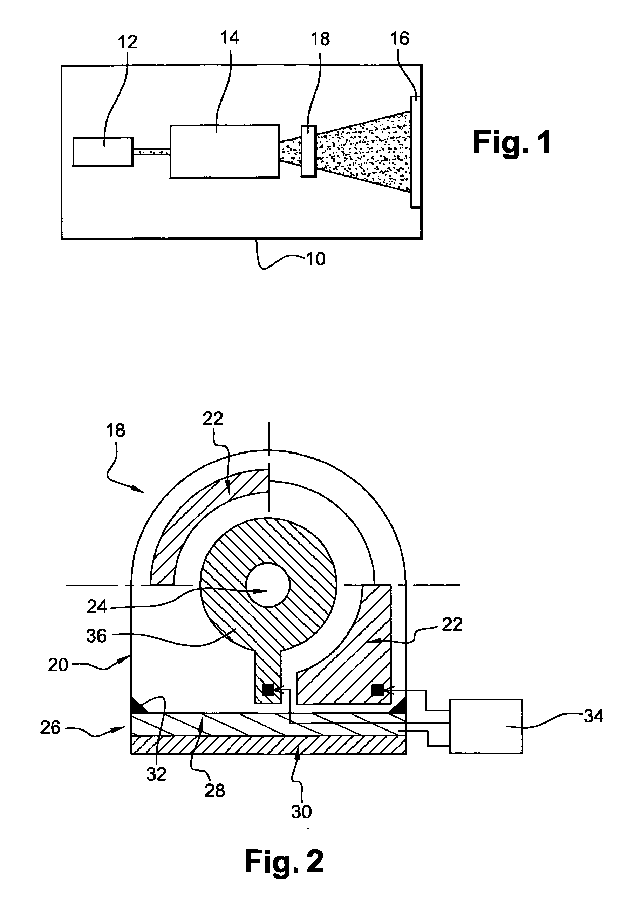

La figure 1 montre un exemple d'unité de projection 10 qui, dans une configuration classique, comprend une source de lumière cohérente 12, telle que par ex. un laser, une unité optique de mise en forme du faisceau laser 14 (à diffraction ou non) et un afficheur 16.

Un dispositif réducteur de speckles 18 est placé sur le chemin du faisceau de lumière cohérente entre la source 12 et l'afficheur 16, ici après l'unité optique de mise en forme du faisceau 14.

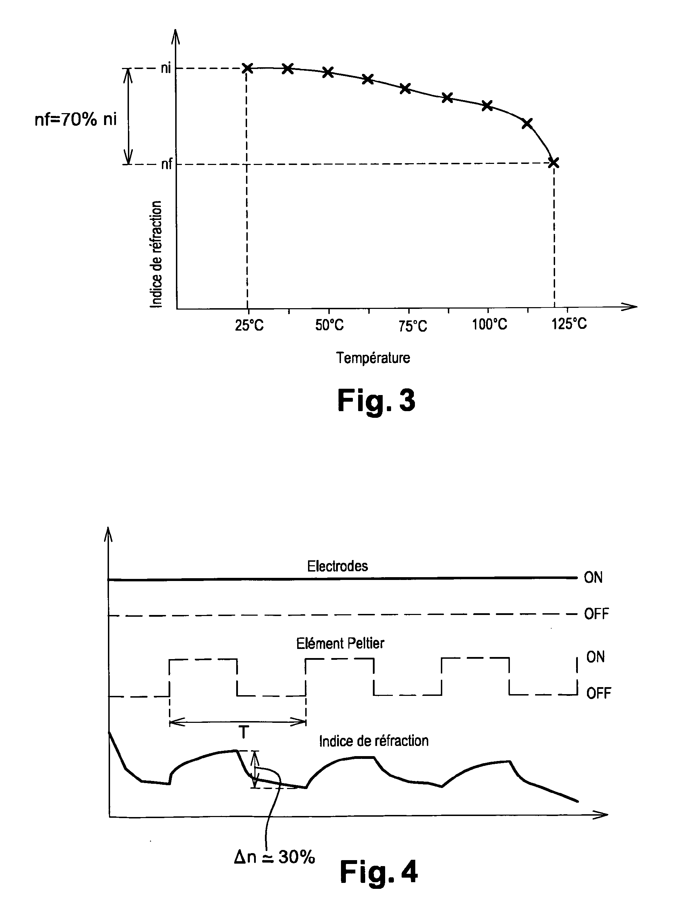

Un mode de réalisation exemplaire d'un dispositif réducteur de speckles 18 est illustré en détails sur la figure 2. Il comprend un élément optique 20 destiné à être traversé par le faisceau laser à traiter. Dans la présente variante, cet élément optique 20 est un cristal de quartz. Conformément à la présente invention, c'est la variabilité de l'indice de réfraction du cristal de quartz 20 en fonction de la température qui est exploitée pour réduire les speckles. Cette variabilité est illustrée par la courbe de la figure 3. Comme on peut le voir, le chauffage d'un cristal de quartz de 25 à 125°C occasionne une diminution de 30% de l'indice de réfraction du cristal.

Sur la figure 2, le signe de référence 22 indique deux électrodes résistives (par ex. en platine) apposées sur la face avant du cristal 20, reliées entre elles, qui permettent le chauffage du cristal de sorte à faire varier son indice de réfraction. Ces électrodes sont préférablement disposées dans une configuration non symétrique, de sorte à créer une distribution non uniforme de la température dans le cristal 20.

Au vu de la configuration choisie, le présent dispositif 18 doit être agencé de sorte que le faisceau lumineux à traiter traverse la partie centrale 24 du cristal de quartz 20, qui forme un chemin optique de traitement.

Un élément refroidisseur 26 est associé au cristal 20 de sorte à pouvoir sélectivement extraire de la chaleur du cristal 20 et modifier sa température. De préférence, l'élément refroidisseur 26 comprend un élément Peltier 28 adossé à un dissipateur de chaleur 30. Le principe de fonctionnement d'un élément Peltier étant connu en soi, il ne sera pas décrit ici. Le couplage thermique entre l'élément refroidisseur 26 et le cristal 20 se fait à travers un support de fixation métallique 32 du cristal. La base du cristal 20 peut être en contact direct avec l'élément Peltier 28.

Enfin, le dispositif 18 est commandé par un module de commande 34 qui pilote les électrode d'échauffement 22 ainsi que l'élément refroidisseur 26. Comme expliqué, le module de commande 34 combine les effets de chauffage et de refroidissement pour causer des variations de température dans le cristal et faire varier son indice de réfraction.

Pour un contrôle optimal des variations de température, il est souhaitable de déterminer la température du cristal à proximité de la zone de traitement 24. Bien que cela puisse se faire par une mesure de température classique, on préférera la déduire de la fréquence d'oscillation du cristal piézo-électrique. A cet effet, une électrode 36 est apposée sur la face avant du cristal, une électrode symétrique (non montrée) étant apposée sur la face opposée, et le module de commande 34 comprend un circuit oscillateur. L'application d'un champ électrostatique sur l'une de ces électrodes 36 permet d'engendrer des fréquences dues au champ électrostatique et au poids des électrodes (les fréquences étant préférablement celles pour une excitation dite « cisaillement en épaisseur »). La détection de ces fréquences par l'électrode sur la face opposée permet, en utilisant le coefficient fréquence-température du matériau utilisé (c.-à-d. le quartz pour la coupe utilisée), de déterminer la température du cristal.

Ainsi, la mesure de la fréquence d'oscillation du quartz à l'aide des électrodes 36 permet de déterminer la température du cristal 20, sachant qu'avec la configuration de cristal telle que présentée ci-dessus on estime la variation de fréquence de l'ordre de 500 Hz/°C.

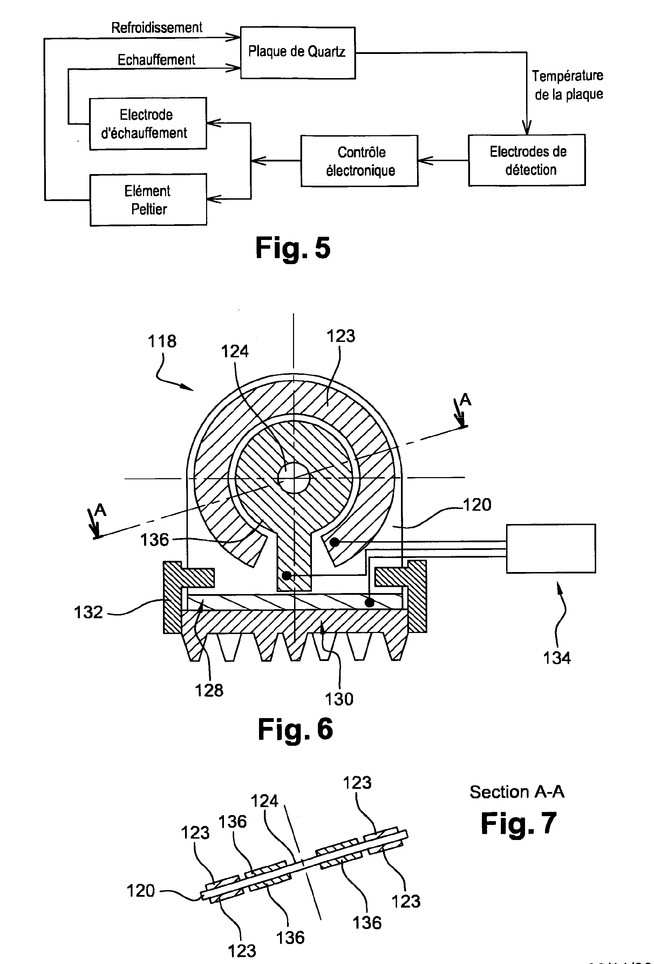

On notera par ailleurs qu'on peut réaliser un chauffage d'un cristal piézo-électrique uniquement en excitant un mode vibratoire de celui-ci. Un tel mode de réalisation est illustré à la figure 6 ; les éléments identiques ou similaires à ceux de la figure 1 sont indiqués par les mêmes signes de référence, augmentés de 100. Au lieu des électrodes résistives 22; deux électrodes excitatrices 123 sont disposées symétriquement sur des deux faces du cristal de quartz 120. La partie centrale 124 du cristal 120 constitue le chemin optique de traitement qui doit être traversé par le faisceau lumineux à traiter.

Comme pour le dispositif de la Fig.1, un élément refroidisseur 126 est associé au cristal 120 de sorte à pouvoir sélectivement extraire de la chaleur du cristal 120 et modifier sa température. De préférence, l'élément refroidisseur 126 comprend un élément Peltier 28 adossé à un dissipateur de chaleur 130. Le couplage thermique entre l'élément refroidisseur 126 et le cristal 120 se fait à travers un support de fixation métallique 132 du cristal. La base du cristal 120 peut être en contact direct avec l'élément Peltier 128.

Le module de commande 134 gère la combinaison des effets de chauffage et de refroidissement pour causer des variations de température dans le cristal et faire varier son indice de réfraction.

Pour les électrodes excitatrices 123, on utilise de préférence des électrodes de forme générale annulaire, en or ou en argent ; ces électrodes sont pilotées par un circuit oscillateur intégré au module de commande 134. Pour la mesure de la température, on garde les mêmes électrodes centrales 136.

Comme on le voit sur les figures 1 et 6, dans la pratique, les éléments à appliquer sur l'élément optique, tels qu'électrodes excitatrices, résistives et/ou de détection de température, sont préférablement positionnés à la périphérie de la zone de traitement 24 de l'élément optique. La dimension (aire) de cette zone de traitement est bien entendu adaptée au diamètre du faisceau à traiter.

Le principe général de fonctionnement du présent dispositif 18, 118 est illustré à la figure 5. Le module de commande pilote les électrodes chauffantes 22, respectivement les électrodes excitatrices 123, et le bloc refroidisseur 26, 126, de sorte à causer des variations de températures contrôlées au sein du cristal 20, 120. Le module de commande 34, 134 pilote également les électrodes 36, 136 afin de déterminer la température du cristal 20, 120, et contrôler en conséquence le cycle de chauffe/refroidissement.

Un scénario de commande préféré du dispositif est illustré sur la Fig.4. Comme on le voit, le cristal est chauffé de manière permanente via les électrodes 22, respectivement 123. L'élément refroidisseur 26, 126 est quant à lui activé de manière temporaire, venant contrer l'échauffement engendré par le mode vibratoire. En contrôlant de manière appropriée les durées de marche et d'arrêt de l'élément Peltier 28, 128, on génère des variations de l'indice de réfraction dans le cristal de quartz 20, 120 d'amplitude et de fréquence déterminés.

De préférence, le module de commande produit des variations d'indice de réfraction aléatoires ou pseudo-aléatoires, et ceci à des fréquences supérieures ou égales à la fréquence de perception visuelle. C'est ainsi qu'on obtient un effet de moyennage de phase du faisceau cohérent dans l'oeil de l'utilisateur.

A cet effet, on pilote ici l'élément Peltier 28, 128 à une fréquence d'au moins 50 Hz, ce qui implique pour le cristal une alternance d'au moins 50 fronts montants et descendants de l'indice de réfraction par seconde. De manière générale, on pourra travailler à des fréquences de l'ordre de 100 à 5000 Hz.

Par ailleurs, pour un effet sensible, on utilisera une plage de température entraînant préférablement une variation d'au moins 15% à 20% (en valeur absolue), de manière plus préférée d'au moins 30% de l'indice de réfraction entre la température minimum d'une période et la température maximum. Ici on fait donc varier la température du cristal de l'ambiante à plus de 100°C sur chaque période. Selon un mode de réalisation, le cristal piézo-électrique sélectionné présente une variation d'indice de réfraction de l'ordre de 10 à 25%, notamment de 15 à 20%, sur une plage de températures d'une amplitude de l'ordre de 40°C à 50°C, c'est-à-dire de l'ambiante à environ 60°C.

Le principe de fonctionnement général étant donné, il reste à fournir quelques détails d'exécution préférés.

Le cristal 20, 120 a de préférence une forme de plaquette de faible épaisseur, tendant préférablement vers une plaque infinie, et qui est taillée pour fonctionner dans le mode de vibration/déformation dit de « cisaillement en épaisseur ». Par plaque infinie, on entend une plaquette dont l'épaisseur est faible par rapport à son extension dans le plan de la plaquette, se traduisant par un rapport diamètre (ou longueur) sur épaisseur de préférence supérieur à 10. Par exemple, le cristal 20, 120 peut avoir une forme de plaquette ayant un rapport diamètre (ou longueur) sur épaisseur supérieur à 10 ou 15. C'est ce mode vibratoire (ou de déformation infinitésimale) de « cisaillement en épaisseur » qui est utilisé dans les deux variantes ci-dessus, donc pour la mesure de température mais également pour obtenir l'échauffement du cristal pour le dispositif 118.

On pourra donc utiliser un monocristal de quartz taillé dans une coupe en simple rotation, conventionnellement appelée *y+θ*. Comme on le sait, les propriétés thermiques du quartz dépendent de son angle de coupe, même si les relations restent empiriques. Pour une application dans le présent dispositif, la taille peut varier dans la gamme comprise entre la coupe dite AT et la coupe dite BT, ce qui signifie pour $\theta$ : -49° $\leq \theta \leq$ 35.

Pour un fonctionnement dans une plage de température allant de -30°C à environ 160°C, l'angle $\theta$ peut notamment se situer dans l'intervalle 4 à 24°, une valeur particulièrement préférée étant environ 14°.

Cette taille du cristal de quartz se traduit par des fréquences de résonance de quelques MHz à quelques centaines de MHz, typiquement entre 1 et 500 MHz.

On l'aura compris, l'effet piézo-électrique est utilisé dans la variante de la figure 1 pour détecter l'échauffement engendré au sein du cristal ; alors que dans la variante de la figure 6 l'effet piézo-électrique est en outre utilisé pour chauffer le cristal de sorte à provoquer une variation de l'indice de réfraction désirée. On exploite des fréquences de vibration élevées dans un mode de vibration qui n'est normalement pas destiné à l'actionnement. La déformation du cristal est de l'ordre de quelque nm et n'est donc pas observable à l'échelle macroscopique. Ainsi, le présent dispositif, bien qu'utilisant l'effet piézo-électrique, peut être considéré comme statique (ou quasi-statique), par opposition aux systèmes de réduction de speckles employant des mécanismes de rotation ou translation.

Conventionnellement, la coupe du cristal est réalisée après mesure de l'angle θ par diffraction de rayons X, puis la pièce de quartz obtenue est polie.

Pour la réalisation des électrodes, on pourra appliquer les procédés classiquement utilisés dans la fabrication de résonateurs à Quartz. Selon une variante, on dépose successivement sur chaque face et sous vide une couche de chrome puis une couche d'or. Pour l'électrode résistive, on peut utiliser du platine.

On notera que dans la variante de la Fig.6, les électrodes 123 et 136 sont choisies de manière à couvrir la presque de totalité de chacune des faces de la plaque en quartz (à l'exception de la zone de passage de la lumière 124). Par exemple, sur une face du cristal 120, le rapport entre la surface des électrodes et la surface de la plaquette 120 (sans la zone centrale 124) est de préférence supérieur à 0,6. Les électrodes 123 et 136 sont déposées symétriquement sur les deux faces de la plaque, comme on peut le voir sur la Figure 7.

Le poids des électrodes 123 et 136 participe à engendrer les déformations dans l'épaisseurs (déformation de cisaillement en épaisseur).

Les formes des électrodes sont ensuite réalisées par photolithographie. Une couche de résine photosensible est appliquée sur les deux faces. Deux photo-masques ayant des ouvertures correspondant aux formes des électrodes sont positionnés de part et d'autre du cristal. Et les deux faces du cristal sont exposées simultanément aux UV à travers les photo-masques de sorte à polymériser les portions de résine exposées, et ce qui permet d'obtenir une haute précision sur le positionnement relatif des électrodes.

La résine non polymérisée est enlevée, et le chrome et l'or non protégés par la couche de résine non polymérisée sont ensuite éliminés par une solution chimique appropriée. Enfin, la résine restante est enlevée, laissant place aux électrodes.

Sur le plan du contrôle, le module de commande comprend un circuit oscillateur connecté aux électrodes 36, 136 et qui pilote le résonateur de quartz 20, 120. On considère que la forme annulaire des électrodes 36, 136 ou encore les électrodes 123 permet une excitation optimale du mode cisaillement en épaisseur.

Enfin, bien que la présente variante utilise un cristal de quartz, il est clair que l'homme du métier pourra mettre en oeuvre la présente invention avec d'autres cristaux ayant des propriétés optiques et piézo-électriques appropriées. En particulier, on pourrait employer par exemple de la berlinite ($AlPO_4$).

**Revendications**

1. Dispositif réducteur de speckles pour un faisceau de lumière cohérente comprenant un élément optique (120) destiné à être traversé par le faisceau de lumière cohérente à traiter, **caractérisé par :**

   des moyens (123) aptes à provoquer un échauffement dudit élément optique (120) ;
   un élément refroidisseur (128) couplé audit élément optique ( 120) de sorte à pouvoir refroidir ce dernier ;
   un module de commande (134) configuré pour commander les moyens d'échauffement et l'élément refroidisseur de sorte à créer des perturbations thermiques aléatoires ou pseudo-aléatoires dans l'élément optique (120), entraînant des variations correspondantes de l'indice de réfraction dudit élément optique,
   et dans lequel l'élément optique est un cristal piézo-électrique ; et les moyens d'échauffement comprennent des électrodes (123) appliquées sur le cristal (120) et connectées au module de commande (134) pour exciter un mode vibratoire du cristal provoquant son échauffement.

2. Dispositif réducteur de speckles selon la revendication 1, dans lequel les perturbations thermiques sont effectuées de sorte que l'indice de réfraction varie à une fréquence supérieure à 50 Hz, de préférence supérieure à 100 Hz.

**3.** Dispositif réducteur de speckles selon l'une quelconque des revendications précédentes, dans lequel l'élément optique (120) est réalisé dans un matériau essentiellement transparent aux longueurs d'ondes du faisceau à traiter et dont l'indice de réfraction varie avec la température.

**4.** Dispositif réducteur de speckles selon l'une quelconque des revendications précédentes, dans lequel le cristal piézo-électrique est en quartz ou en berlinite.

**5.** Dispositif réducteur de speckles selon l'une quelconque des revendications précédentes, dans lequel le module de commande (134) est configuré de sorte à exciter le mode de cisaillement en épaisseur du cristal piézo-électrique.

**6.** Dispositif réducteur de speckles selon l'une quelconque des revendications précédentes, comprenant des moyens pour mesurer la fréquence d'oscillation du cristal (120) et déterminer sur base de celle-ci la température du cristal.

**7.** Dispositif réducteur de speckles selon l'une quelconque des revendications précédentes, dans lequel l'élément refroidisseur comprend un élément Peltier (128) associé de préférence à un dissipateur de chaleur (130).

**8.** Dispositif réducteur de speckles selon l'une quelconque des revendications précédentes, dans lequel le cristal (120) a une forme de plaque infinie présentant un rapport diamètre, respectivement longueur, sur épaisseur supérieur à 10.

**9.** Unité de projection comprenant un dispositif réducteur de speckles selon l'une quelconque des revendications précédentes.

**10.** Dispositif d'affichage tête haute comprenant une unité de projection pourvue d'un dispositif réducteur de speckles selon l'une quelconque des revendications 1 à 8.

**11.** Source de lumière cohérente comprenant un dispositif réducteur de speckles selon l'une quelconque des revendications 1 à 8.

**12.** Méthode de réduction de speckles dans laquelle un faisceau de 5 lumière cohérente à traiter traverse un élément optique (120), **caractérisée en ce que** cet élément optique est associé à des moyens d'échauffement (123) et à un élément refroidisseur (128) et **en ce qu'**on crée des perturbations thermiques de manière aléatoire ou pseudo aléatoire au sein de cet élément optique de sorte à faire varier son indice de réfraction à une fréquence supérieure à la sensibilité de l'oeil humain, lesdits moyens d'échauffement comprenant des électrodes (123) appliquées sur le cristal piézo-électrique (210) pour exciter un mode vibratoire du cristal provoquant son échauffement.

**13.** Méthode selon la revendication précédente, dans lequel le cristal (120) a une forme de plaque et l'on excite le mode de cisaillement en épaisseur.

**Patentansprüche**

**1.** Vorrichtung zur Unterdrückung des Speckle-Effektes bei einem kohärenten Lichtbündel, enthaltend ein optisches Element (120), das dazu bestimmt ist, von dem zu behandelnden kohärenten Lichtbündel durchquert zu werden, **gekennzeichnet durch**:

Mittel (123), die dazu geeignet sind, eine Erwärmung des optischen Elements (120) hervorzurufen;
ein Kühlelement (128), das mit dem optischen Element (120) so gekoppelt ist, dass es letzteres kühlen kann;
ein Steuermodul (134), das dazu ausgelegt ist, die Heizmittel und das Kühlelement so zu steuern, dass zufällige bzw. pseudozufällige thermische Störungen in dem optischen Element (120) geschaffen werden, die entsprechende Schwankungen des Brechungsindex des optischen Elements bewirken,
und wobei das optische Element ein piezoelektrischer Kristall ist und die Heizmittel Elektroden (123) aufweisen, die an den Kristall (120) angelegt und mit dem Steuermodul (134) verbunden sind, um einen Vibrationsmodus des Kristalls zu erregen, der dessen Erwärmung hervorruft.

**2.** Vorrichtung zur Unterdrückung des Speckle-Effektes nach Anspruch 1, wobei die thermischen Störungen so erfolgen, dass der Brechungsindex mit einer Frequenz höher als 50 Hz, vorzugsweise höher als 100 Hz, schwankt.

**3.** Vorrichtung zur Unterdrückung des Speckle-Effektes nach einem der vorangehenden Ansprüche, wobei das optische Element (120) aus einem Material hergestellt ist, das im Wesentlichen transparent ist gegenüber den Wellenlängen des zu behandelnden Lichtbündels und dessen Brechungsindex mit der Temperatur schwankt.

**4.** Vorrichtung zur Unterdrückung des Speckle-Effektes nach einem der vorangehenden Ansprüche, wobei der piezoelektrische Kristall aus Quarz oder Berlinit besteht.

**5.** Vorrichtung zur Unterdrückung des Speckle-Effektes nach einem der vorangehenden Ansprüche, wobei das Steuermodul (134) so ausgelegt ist, dass es den Dickenschermodus des piezoelektrischen Kristalls erregt.

6.  Vorrichtung zur Unterdrückung des Speckle-Effektes nach einem der vorangehenden Ansprüche, enthaltend Mittel zum Messen der Schwingfrequenz des Kristalls (120) und zum Ermitteln der Temperatur des Kristalls auf Grundlage dieser Frequenz.

7.  Vorrichtung zur Unterdrückung des Speckle-Effektes nach einem der vorangehenden Ansprüche, wobei das Kühlelement ein Peltier-Element (128) aufweist, dem vorzugsweise ein Kühlkörper (130) zugeordnet ist.

8.  Vorrichtung zur Unterdrückung des Speckle-Effektes nach einem der vorangehenden Ansprüche, wobei der Kristall (120) die Form einer endlosen Scheibe hat, die ein Verhältnis von Durchmesser bzw. Länge zu Dicke von über 10 aufweist.

9.  Projektionseinheit mit einer Vorrichtung zur Unterdrückung des Speckle-Effektes nach einem der vorangehenden Ansprüche.

10. Head-Up-Anzeigevorrichtung mit einer Projektionseinheit, die mit einer Vorrichtung zur Unterdrückung des Speckle-Effektes nach einem der Ansprüche 1 bis 8 versehen ist.

11. Kohärente Lichtquelle mit einer Vorrichtung zur Unterdrückung des Speckle-Effektes nach einem der Ansprüche 1 bis 8.

12. Verfahren zur Unterdrückung des Speckle-Effektes, wobei ein zu behandelndes kohärentes Lichtbündel durch ein optisches Element (120) tritt, **dadurch gekennzeichnet, dass** diesem optischen Element Heizmittel (123) und ein Kühlelement (128) zugeordnet sind und dass thermische Störungen innerhalb dieses optischen Elements zufällig bzw. pseudo-zufällig geschaffen werden, so dass dessen Brechungsindex mit einer Frequenz schwankt, die über der Wahrnehmung des menschlichen Auges liegt, wobei die Heizmittel Elektroden (123) aufweisen, die an den piezoelektrischen Kristall (120) angelegt sind, um einen Vibrationsmodus des Kristalls zu erregen, der dessen Erwärmung hervorruft.

13. Verfahren nach dem vorangehenden Anspruch, wobei der Kristall (120) eine Scheibenform hat und der Dickenschermodus erregt wird.

## Claims

1.  Speckle reducing device for a coherent light beam comprising an optical element (120) designed to be traversed by the coherent light beam to be treated, **characterised by**:

    means (123) capable of causing heating of said optical element (120);
    a cooling element (128) coupled to said optical element (120) so as to be able to cool the latter;
    a control module (134) configured to control the heating means and the cooling element so as to create random or pseudo-random thermal disturbances in the optical element (120), giving rise to corresponding variations in the refractive index of said optical element,
    and in which the optical element is a piezoelectric crystal; and the heating means comprise electrodes (123) applied to the crystal (120) and connected to the control module (134) for exciting a vibratory mode of the crystal, causing heating thereof.

2.  Speckle reducing device according to claim 1, in which the thermal disturbances are effected so that the refractive index varies at a frequency higher than 50 Hz, preferably higher than 100 Hz.

3.  Speckle reducing device according to any of the preceding claims, in which the optical element (120) is made of a material essentially transparent to the wavelengths of the beam to be treated and of which the refractive index varies with the temperature.

4.  Speckle reducing device according to any of the preceding claims, in which the piezoelectric crystal is made of quartz or berlinite.

5.  Speckle reducing device according to any of the preceding claims, in which the control module (134) is configured so as to excite the shearing mode in the thickness of the piezoelectric crystal.

6.  Speckle reducing device according to any of the preceding claims, comprising means for measuring the oscillation frequency of the crystal (120) and, on the basis thereof, determining the temperature of the crystal.

7.  Speckle reducing device according to any of the preceding claims, in which the cooling element comprises a Peltier element (128) preferably associated with a heat sink (130).

8.  Speckle reducing device according to any of the preceding claims, in which the crystal (120) is in the form of an infinite plate having a ratio of diameter or length to thickness greater than 10.

9.  Projection unit comprising a speckle reducing device according to any of the preceding claims.

10. Head-up display device comprising a projection unit provided with a speckle reducing device according to any of claims 1 to 8.

11. Coherent light source comprising a speckle reducing device according to any of claims 1 to 8.

12. Method of reducing speckles in which a coherent light beam to be treated traverses an optical element (120), **characterised in that** this optical element is associated with heating means (123) and with a cooling element (128) and **in that** thermal disturbances are created randomly or pseudo-randomly within this optical element so as to vary its refractive index at a frequency greater than the sensitivity of the human eye, said heating means comprising electrodes (123) applied to the piezoelectric crystal (120) in order to excite a vibratory mode of the crystal, causing heating thereof.

13. Method according to the preceding claim, in which the crystal (120) is in the form of a plate and the shearing mode is excited in its thickness.

**Fig. 1**

**Fig. 2**

**Fig. 3**

Δn ≈ 30%    **Fig. 4**

Refroidissement

Echauffement

Plaque de Quartz

Température
de la plaque

Electrode
d'échauffement

Contrôle
électronique

Electrodes de
détection

Elément
Peltier

**Fig. 5**

118  124  123

A

120

136

A

132

128  130

134

**Fig. 6**

Section A-A

**Fig. 7**

123  124  123

123  136

120  123  123

123  136

136

## RÉFÉRENCES CITÉES DANS LA DESCRIPTION

**Documents brevets cités dans la description**

- EP 1510851 A1
- EP 1655636 A1
- US 2009016390 A
- US 2001007510 A
- US 2007058135 A